# EUROPÄISCHE PATENTSCHRIFT

(11) **EP 3 165 785 B1**
(45) Veröffentlichungstag und Bekanntmachung des Hinweises auf die Patenterteilung: **05.09.2018**
(21) Anmeldenummer: 16002282.8
(22) Anmeldetag: 26.10.2016
(51) Int. Cl.: F16D 13/64

(54) **KUPPLUNGSSCHEIBE FÜR EINE LÖSBARE DREHMOMENT-ÜBERTRAGUNGSEINRICHTUNG**
CLUTCH PLATE FOR A RELEASABLE TORQUE TRANSMISSION DEVICE
PLATE D'EMBRAYAGE POUR UN DISPOSITIF DE TRANSMISSION DE COUPLE

(30) Priorität: 06.11.2015 DE 102015014396
(43) Veröffentlichungstag der Anmeldung: 10.05.2017
(73) Patentinhaber: MAN Truck & Bus AG, 80995 München (DE)
(72) Erfinder: Schneider, Bernhard, 85253 Erdweg (DE)
(74) Vertreter: Liebl, Thomas

(56) Entgegenhaltungen:
- EP-A1- 1 933 053
- EP-A2- 2 157 329
- WO-A1-2013/079875
- WO-A1-2016/000705
- DE-A1-102015 122 935
- DE-B4- 19 980 204
- FR-A1- 2 764 019
- US-A- 6 039 163

## Beschreibung

Die Erfindung betrifft eine Kupplungsscheibe für eine lösbare Drehmoment-Übertragungseinrichtung nach dem Oberbegriff des Patentanspruches 1, eine lösbare Drehmoment-Übertragungseinrichtung mit der Kupplungsscheibe nach Patentanspruch 14 sowie ein Fahrzeug, insbesondere ein Nutzfahrzeug, mit der lösbaren Drehmoment-Übertagungseinrichtung nach Patentanspruch 15.

An einem Fahrzeug ist regelmäßig eine lösbare Drehmoment-Übertragungseinrichtung bzw. eine lösbare Kupplung vorgesehen, mittels der eine Antriebseinrichtung des Fahrzeugs, beispielsweise eine Brennkraftmaschine oder eine Elektromaschine, drehmomentübertragend mit einem Getriebe des Fahrzeugs verbunden werden kann. Die lösbare Kupplung weist dabei eine verlagerbare, drehmomentübertragend mit einer Getriebe-Eingangswelle verbundene Kupplungsscheibe auf, die zum Schließen der Kupplung beispielsweise gegen eine Schwungscheibe der Brennkraftmaschine gedrückt bzw. gepresst wird. Auf diese Weise wird eine kraftschlüssige bzw. reibschlüssige Verbindung zwischen der Brennkraftmaschine und Getriebe realisiert. Die Kupplungsscheibe weist üblicherweise eine Trägerplatte auf, die zumindest an einer der Brennkraftmaschinen-Schwungscheibe zugewandten Seite mit einem Reibbelag versehen ist.

Insbesondere während des Schließens der Kupplung sowie auch im geschlossenen Zustand der Kupplung gerät die Trägerplatte der Kupplungsscheibe häufig stark in Schwingung. Diese Schwingungen werden beispielsweise durch die mit der Kupplungsscheibe drehmomentübertragend verbundene Getriebe-Eingangswelle angeregt. Zudem kann die Trägerplatte auch durch den reibungsbedingten Wärmeeintrag in die Trägerplatte in Schwingung gebracht werden. Der Wärmeeintrag in die Trägerplatte kann eine derartige Verformung bzw. eine Ausdehnung der Trägerplatte bewirken, dass sich die Trägerplatte wölbt. Diese Wölbung der Trägerplatte hat zur Folge, dass die Kupplungsscheibe nur noch bereichsweise an der Brennkraftmaschinen-Schwungscheibe anliegt, so dass sie aufgrund der Relativbewegung zwischen der Kupplungsscheibe und der Brennkraftmaschinen-Schwungscheibe ebenfalls zu schwingen beginnt. Die Schwingungen der Trägerplatte verursachen, insbesondere in Eigenfrequenzbereichen der Trägerplatte, häufig deutlich hörbare Geräusche. Zudem wirken sich die Schwingungen der Trägerplatte negativ auf die Haltbarkeit der Kupplungsscheibe, insbesondere auf die Haltbarkeit des Reibbelags der Kupplungsscheibe, aus.

Aufgabe der Erfindung ist es daher, eine Kupplungsscheibe für eine lösbare Drehmoment-Übertragungseinrichtung bereitzustellen, die ein verbessertes Schwingverhalten aufweist. Diese Aufgabe wird durch die Merkmale der unabhängigen Ansprüche gelöst. Bevorzugte Weiterbildungen sind in den Unteransprüchen offenbart.

Im Stand der Technik (siehe EP1933053 u.a.) wird eine Kupplungsscheibe für eine lösbare Drehmoment-Übertragungseinrichtung vorgeschlagen, mit einer Trägerplatte, an der ein Reibbelag zum kraftschlüssigen Schließen der Drehmoment-Übertragungseinrichtung vorgesehen ist.

Gattungsgemäss ist zur Beeinflussung des Schwingverhaltens der Kupplungsscheibe, insbesondere zur Dämpfung wenigstens einer definierten Kupplungsscheiben-Schwingung, wenigstens ein Schwingungs-Beeinflussungsbereich an der Trägerplatte ausgebildet, wobei der Schwingungs-Beeinflussungsbereich durch eine Ausnehmung und/oder durch eine Einprägung bzw. Vertiefung an der Trägerplatte gebildet ist.

Auf diese Weise wird das Schwingverhalten der Kupplungsscheibe deutlich verbessert, da mittels der wenigstens einen Ausnehmung und/oder mittels der wenigstens einen Einprägung einerseits Schwingungen der Trägerplatte gezielt unterbrochen bzw. abgedämpft werden können, so dass sich die Schwingungen nicht in dem üblichen Maß ausbreiten können. Zudem kann mittels der wenigstens einen Ausnehmung und/oder mittels der wenigstens einen Einprägung auch einer wärmebedingten Wölbung der Trägerplatte und somit einer wölbungsbedingten Schwingungsanregung der Trägerplatte gezielt entgegengewirkt werden. Die Form und die Position des wenigstens einen Schwingungs-Beeinflussungsbereichs sowie die Anzahl der Schwingungs-Beeinflussungsbereiche kann dabei beispielsweise von der Art der zu beeinflussenden Schwingung, von der Frequenz der zu beeinflussenden Schwingung, von der Dicke der Trägerplatte, von dem Material der Trägerplatte oder von der Drehrichtung der Trägerplatte abhängig sein.

Die Begrifflichkeit "Einprägung" ist hier dabei ausdrücklich in einem weiten Sinne zu verstehen. So kann zur Ausbildung der Einprägung beispielsweise nur eine Hauptflächenwand der Trägerplatte eingedrückt bzw. verformt werden. Ebenso kann zur Ausbildung der Einprägung die Trägerplatte auch durchgedrückt werden, so dass beide Hauptflächenwände der Trägerplatte verformt werden.

In einer bevorzugten Ausgestaltung der Kupplungsscheibe erstreckt sich die wenigstens eine Ausnehmung in Trägerplatten-Dickenrichtung durchgängig bzw. vollständig durch die Trägerplatte. Dadurch können die Schwingungen der Trägerplatte auf besonders effektive Weise unterbrochen bzw. abgedämpft werden. Die durchgängige Ausnehmung kann dabei beispielsweise mittels eines Lasers, mittels einer Fräse, einer Stanze oder durch Erodieren gefertigt werden. Alternativ kann natürlich aber auch vorgesehen sein, dass sich die wenigstens eine Ausnehmung nicht durchgängig durch die Trägerplatte erstreckt, so dass sich die Ausnehmung bis in eine Tiefe durch die Trägerplatte erstreckt, die geringer als die Dicke der Trägerplatte ist.

Vorzugsweise verläuft der wenigstens eine Schwingungs-Beeinflussungsbereich, in Draufsicht auf die Trägerplatte gesehen, linienförmig, insbesondere in einer linienförmigen Kurvenbahn, um die Schwingungen der Trägerplatte effektiv beeinflussen zu können und gleichzeitig die Trägerplatte mit einer hohen Festigkeit zu versehen. Bevorzugt ist dabei vorgesehen, dass ein erster Endbereich des linienförmigen Schwingungs-Beeinflussungsbereichs radial innerhalb eines zweiten Endbereichs des linienförmigen Schwingungs-Beeinflussungsbereichs angeordnet ist, um einer wärmebedingten Wölbung der Trägerplatte effektiv entgegenzuwirken. Weiter bevorzugt ist wenigstens ein Endbereich des linienförmigen Schwingungs-Beeinflussungsbereichs, in Drehrichtung der Kupplungsscheibe gesehen, hinter einem sich unmittelbar an den Endbereich anschließenden Bereich des linienförmigen Schwingungs-Beeinflussungsbereichs angeordnet.

In einer bevorzugten Ausgestaltung verläuft der wenigstens eine linienförmige Schwingungs-Beeinflussungsbereich geradlinig. Bevorzugt ist dabei vorgesehen, dass der wenigstens eine geradlinige Schwingungs-Beeinflussungsbereich in Kupplungsscheiben-Radialrichtung verläuft, um einer wärmebedingten Wölbung der Trägerplatte entgegenzuwirken. Weiter bevorzugt ist der wenigstens eine geradlinige Schwingungs-Beeinflussungsbereich mit einem definierten Spaltabstand von einer radial inneren Wandung der Trägerplatte beabstandet. Ebenso bevorzugt ist der wenigstens eine geradlinige Schwingungs-Beeinflussungsbereich mit einem definierten Spaltabstand von einer radial äußeren Wandung der Trägerplatte beabstandet.

Erfindungsgemäß ist der Schwingungs-Beeinflussungsbereich mäanderförmig ausgebildet. Bevorzugt ist dabei vorgesehen, dass der wenigstens eine mäanderförmige Schwingungs-Beeinflussungsbereich im Wesentlichen sinusförmig mit in Kupplungsscheiben-Radialrichtung nach innen abnehmender Amplitude ausgebildet ist. Durch eine derartige Ausgestaltung des Schwingungs-Beeinflussungsbereichs kann einer wärmebedingten Wölbung der Trägerplatte ebenfalls effektiv entgegengewirkt werden.

Weiter bevorzugt ist der wenigstens eine mäanderförmige Schwingungs-Beeinflussungsbereich mit einem definierten Abstand von einer radial inneren Wandung der Trägerplatte beabstandet. Ebenso bevorzugt ist der wenigstens eine mäanderförmige Schwingungs-Beeinflussungsbereich mit einem definierten Spaltabstand von einer radial äußeren Wandung der Trägerplatte beabstandet.

Weiter alternativ zu dem geradlinigen Verlauf des Schwingungs-Beeinflussungsbereichs kann der wenigstens eine linienförmige Schwingungs-Beeinflussungsbereich auch im Wesentlichen hakenförmig ausgebildet sein. Bevorzugt ist dabei vorgesehen, dass der wenigstens eine hakenförmige Schwingungs-Beeinflussungsbereich mit einem Endbereich in eine radial äußere Wandung der Trägerplatte mündet.

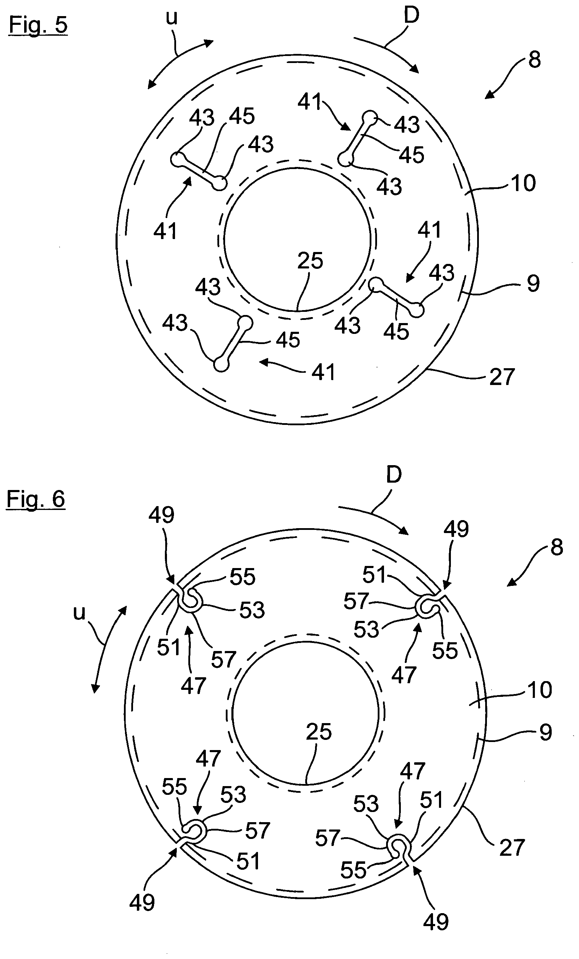

Weiter bevorzugt weist der hakenförmige Schwingungs-Beeinflussungsbereich ausgehend von der radial äußeren Wandung der Trägerplatte einen im Wesentlichen S-förmigen Abschnitt auf, an dem sich ein im Wesentlichen C-förmiger Abschnitt des hakenförmigen Schwingungs-Beeinflussungsbereichs anschließt. Besonders bevorzugt ist der hakenförmige Schwingungs-Beeinflussungsbereich dabei gemäß der in Fig. 6 gezeigten Ausführungsform des hakenförmigen Schwingungs-Beeinflussungsbereichs ausgebildet. Alternativ und/oder zusätzlich kann der hakenförmige Schwingungs-Beeinflussungsbereich auch ausgehend von der radial äußeren Wandung der Trägerplatte auch im Wesentlichen L-förmig oder im Wesentlichen U-förmig mit einem verkürzten U-Schenkel ausgebildet sein.

In einer erfindungsgemässen Ausgestaltung ist die Einprägung, im Querschnitt quer zum Linienverlauf des linienförmigen Schwingungs-Beeinflussungsbereichs gesehen, mäanderförmig und/oder wellenförmig ausgebildet, um die Schwingungen der Trägerplatte auf besonders effektive Weise unterbrechen bzw. dämpfen zu können.

Vorzugsweise ist zur Verringerung der Kerbwirkung des linienförmigen Schwingungs-Beeinflussungsbereichs wenigstens ein Endbereich des linienförmigen Schwingungs-Beeinflussungsbereichs im Vergleich zu einem sich daran anschließendem Haupterstreckungsbereich des linienförmigen Schwingungs-Beeinflussungsbereichs, in Draufsicht auf die Trägerplatte gesehen, aufgeweitet und/oder breiter bzw. verbreitert ausgebildet. Dadurch kann hohen Kerbspannungen an dem Endbereich des linienförmigen Schwingungs-Beeinflussungsbereichs effektiv entgegengewirkt werden.

Alternativ und/oder zusätzlich kann zur Verringerung der Kerbwirkung des linienförmigen Schwingungs-Beeinflussungsbereichs wenigstens ein Endbereich des linienförmigen Schwingungs-Beeinflussungsbereichs eine runde, insbesondere eine tropfenförmige und/oder eine kreisförmige und/oder eine kugelförmige, Außenkontur aufweisen.

In einer bevorzugten konkreten Ausgestaltung ist der Kupplungs-Reibbelag durch zumindest eine an der Trägerplatte festgelegte Reibplatte gebildet, wobei die Reibplatte einer Hauptflächenwand der Trägerplatte zugeordnet ist, wobei die wenigstens eine Einprägung der Trägerplatte in Trägerplatten-Dickenrichtung von dieser Hauptflächenwand abragt, und wobei die Reibplatte wenigstens eine Ausnehmung aufweist, in die die wenigstens eine von der Hauptflächenwand der Trägerplatte abragende Einprägung einragt. Dadurch wird ein besonders einfacher Aufbau der Kupplungsscheibe realisiert. Die Reibplatte kann dabei beispielsweise mit der Trägerplatte vernietet, verschraubt oder auf die Trägerplatte aufgeklebt sein. Sofern zwischen der Trägerplatte und der Reibplatte ein im Wesentlichen plattenförmiges Federelement angeordnet ist, ist an dem Federelement vorzugsweise ebenfalls wenigstens eine Ausnehmung vorgesehen, durch die die von der wenigstens einen abragenden Einprägung durchragt.

Vorzugsweise erstreckt sich die wenigstens eine Ausnehmung in Reibplatten-Dickenrichtung durchgängig bzw. vollständig durch die Reibplatte, um die Schwingungen der Trägerplatte besonders effektiv zu unterbrechen bzw. zu dämpfen. Alternativ kann aber auch vorgesehen sein, dass sich die wenigstens eine Ausnehmung nur bis in eine Tiefe durch die Reibplatte erstreckt, die geringer als die Reibplatten-Dicke ist.

In einer weiteren bevorzugten Ausgestaltung sind mehrere Schwingungs-Beeinflussungsbereiche an der Trägerplatte ausgebildet. Bevorzugt ist dabei vorgesehen, dass die mehreren Schwingungs-Beeinflussungsbereiche, in Kupplungsscheiben-Umfangsrichtung gesehen, voneinander beabstandet und/oder gleichmäßig über die Trägerplatte verteilt angeordnet sind, um die Schwingungen der Trägerplatte effektiv beeinflussen zu können.

Vorzugsweise weist wenigstens ein Teil der mehreren linienförmigen Schwingungs-Beeinflussungsbereiche, in Draufsicht auf die Trägerplatte gesehen, einen anderen Linienverlauf auf als wenigstens ein anderer Teil der mehreren linienförmigen Schwingungs-Beeinflussungsbereiche. Bevorzugt ist dabei vorgesehen, dass mehrere, insbesondere drei, Gruppen mit jeweils mehreren, insbesondere mit jeweils vier, Schwingungs-Beeinflussungsbereichen vorgesehen sind, wobei die Schwingungs-Beeinflussungsbereiche der jeweiligen Gruppe einen identischen Linienverlauf aufweisen und sich die Gruppen durch den Linienverlauf der Schwingungs-Beeinflussungsbereiche unterscheiden.

In einer bevorzugten konkreten Ausgestaltung ist der Kupplungs-Reibbelag durch mehrere, insbesondere durch zwei, an der Trägerplatte festgelegte Reibplatten gebildet, wobei wenigstens eine Reibplatte einer ersten Hauptflächenwand der Trägerplatte zugeordnet ist, und wobei wenigstens eine Reibplatte einer zweiten Hauptflächenwand der Trägerplatte zugeordnet ist. Der jeweiligen Hauptflächenwand der Trägerplatte kann dabei beispielsweise eine scheibenförmige Reibplatte zugeordnet sein. Alternativ können der jeweiligen Hauptflächenwand der Trägerplatte auch mehrere scheibensektorförmige bzw. kuchenstückförmige Reibplatten zugeordnet sein, die in Kupplungsscheiben-Umfangsrichtung verteilt angeordnet werden.

Weiter bevorzugt ist zwischen wenigstens einer Hauptflächenwand der Trägerplatte und der zugeordneten Reibplatte wenigstens ein im Wesentlichen scheibenförmiges Federelement angeordnet, mittels dem auf die Kupplungsscheibe wirkende Axialkräfte abgefedert werden können.

Des Weiteren wird auch eine lösbare Drehmoment-Übertragungseinrichtung bzw. eine lösbare Kupplung mit der erfindungsgemäßen Kupplungsscheibe beansprucht. Die sich hieraus ergebenden Vorteile sind identisch mit den bereits gewürdigten Vorteilen der erfindungsgemäßen Kupplungsscheibe, so dass diese an dieser Stelle nicht wiederholt werden.

Zudem wird auch ein Fahrzeug, insbesondere ein Nutzfahrzeug, mit der erfindungsgemäßen lösbaren Drehmoment-Übertragungseinrichtung beansprucht. Die sich hieraus ergebenden Vorteile sind ebenfalls identisch mit den bereits gewürdigten Vorteilen der erfindungsgemäßen Kupplungsscheibe, so dass diese hier ebenfalls nicht wiederholt werden.

In einer bevorzugten Ausgestaltung des Fahrzeugs ist die Kupplungsscheibe dabei drehmomentübertragend mit einer Eingangswelle eines Fahrzeuggetriebes verbunden.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer Seitenansicht einen Lastkraftwagen mit der erfindungsgemäßen lösbaren Drehmoment-Übertragungseinrichtung;
- Fig. 2: einen Schnitt durch die lösbare Drehmoment-Übertragungseinrichtung;
- Fig. 3: in einer Ansicht von oben eine Kupplungsscheibe der Übertragungseinrichtung;
- Fig. 4: eine Schnittdarstellung entlang der Schnittebene A-A aus Fig. 3;
- Fig. 5: in einer Darstellung gemäß Fig. 3 eine zweite Ausführungsform der Kupplungsscheibe;
- Fig. 6: in einer Darstellung gemäß Fig. 3 eine dritte Ausführungsform der Kupplungsscheibe;
- Fig. 7: in einer Darstellung gemäß Fig. 3 eine vierte Ausführungsform der Kupplungsscheibe;
- Fig. 8: einen Schnitt durch eine fünfte Ausführungsform der Kupplungsscheibe; und
- Fig. 9: in einer Darstellung gemäß Fig. 8 eine sechste Ausführungsform der Kupplungsscheibe.

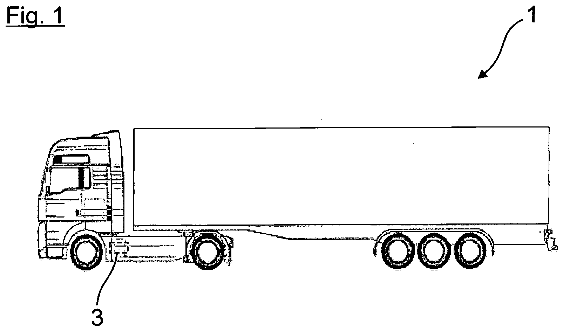

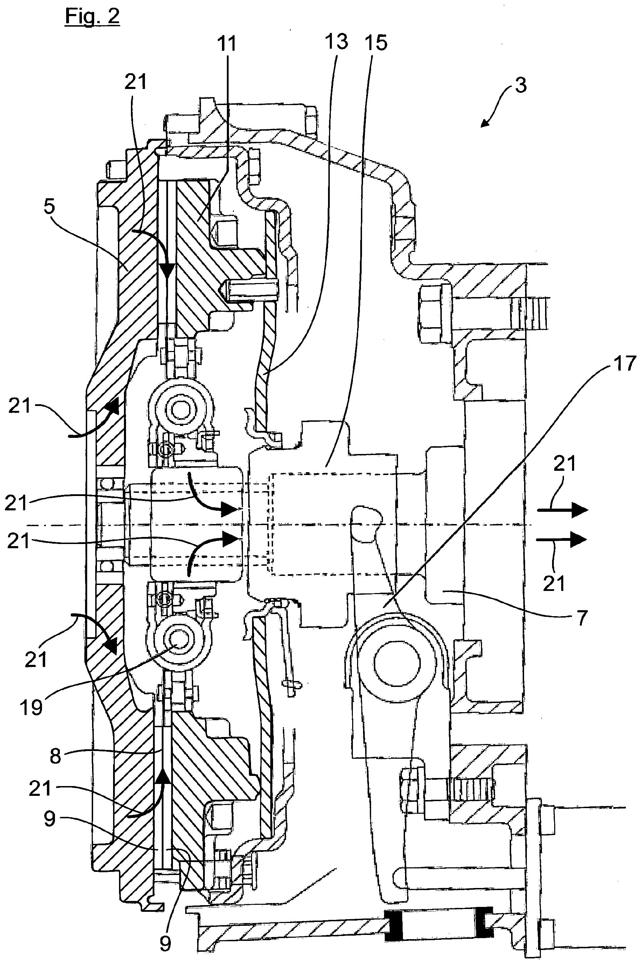

In Fig. 1 ist ein hier beispielhaft als Lastkraftwagen ausgebildetes Fahrzeug 1 gezeigt. Das Fahrzeug 1 weist eine in Fig. 1 mit gestrichelten Linien angedeutete erste Ausführungsform einer lösbaren Drehmoment-Übertragungseinrichtung 3 bzw. einer lösbaren Kupplung auf, mittels der eine, eine Antriebseinrichtung des Fahrzeugs 1 bildende Brennkraftmaschine drehmomentübertragend mit einem Getriebe des Fahrzeugs 1 verbunden werden kann. Der Aufbau der Drehmoment-Übertragungseinrichtung 3 wird nachfolgend anhand von Fig. 2 näher erläutert:

Gemäß dem in Fig. 2 gezeigten Schnitt durch die Drehmoment-Übertragungseinrichtung 3 weist die Drehmoment-Übertragungseinrichtung 3 hier beispielhaft ein brennkraftmaschinenseitiges Schwungrad 5, eine drehmomentübertragend mit einer Getriebe-Eingangswelle 7 verbundene Kupplungsscheibe 8 mit einem Reibbelag 9, eine Druckplatte 11, eine Kupplungsfeder bzw. eine Membranfeder 13, einen Ausrücker 15 sowie einen Ausrückhebel 17 auf. Zudem ist die Kupplungsscheibe 8 ist hier beispielhaft über einen Torsionsdämpfer 19 mit der Getriebe-Eingangswelle 7 verbunden. In Fig. 2 ist die Drehmoment-Übertragungseinrichtung 3 in einem geschlossenen Zustand gezeigt, so dass das brennkraftmaschinenseitige Schwungrad 5 und die getriebeseitige Eingangswelle 7 über einen Kraftfluss 21 drehmomentübertragend miteinander verbunden sind. Des Weiteren handelt es sich bei dem in Fig. 2 gezeigten Aufbau nur um eine beispielhafte Ausgestaltung der Drehmoment-Übertragungseinrichtung 3, aus der der grundsätzliche Aufbau sowie die grundsätzliche Funktion der Drehmoment-Übertragungseinrichtung 3 hervorgehen soll. Die erfindungsgemäße Drehmoment-Übertragungseinrichtung 3 ist jedoch ausdrücklich nicht auf einen derartigen Aufbau beschränkt. Beispielsweise muss an der Drehmoment-Übertragungseinrichtung 3 nicht zwingend der Torsionsdämpfer 19 vorgesehen sein.

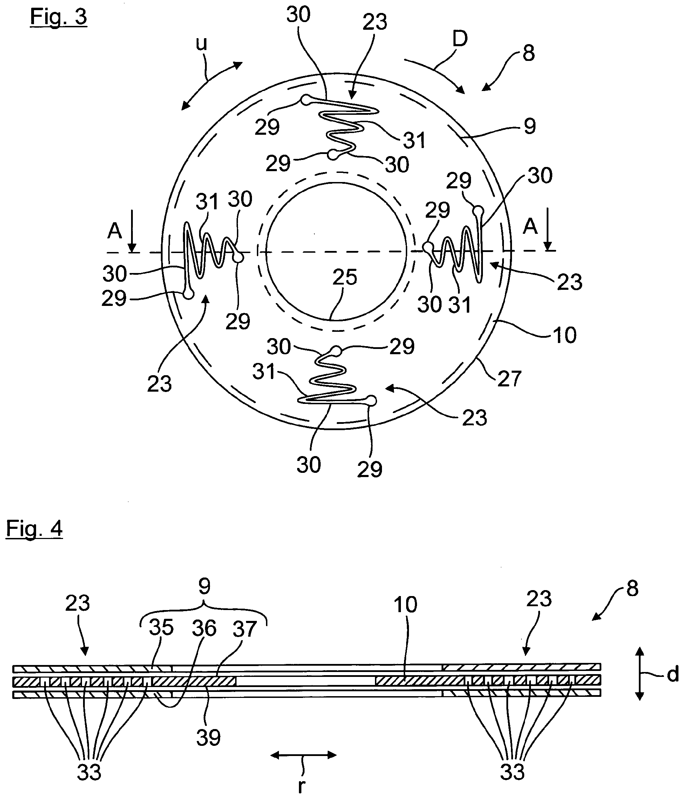

In Fig. 3 ist die Kupplungsscheibe 8 in einer Ansicht von oben bzw. in Draufsicht gezeigt. Der Reibbelag 9 ist hier mit gestrichelten Linien angedeutet, so dass die Trägerplatte 10 der Kupplungsscheibe 8 ersichtlich ist. Die Trägerplatte 10 weist hier beispielhaft mehrere Schwingungs-Beeinflussungsbereiche 23 auf, mittels denen das Schwingverhalten der Kupplungsscheibe beeinflusst wird. Konkret weist die Trägerplatte 10 hier beispielhaft vier im Wesentlichen linienförmige Schwingungs-Beeinflussungsbereiche 23 auf, die einen identischen Linienverlauf aufweisen und gleichmäßig bzw. in Kupplungsscheiben-Umfangsrichtung u hier beispielhaft um 90° voneinander beabstandet über die Trägerplatte 10 verteilt angeordnet sind. Jeder linienförmige Schwingungs-Beeinflussungsbereich 23 ist hier beispielhaft im Wesentlichen sinusförmig mit in Kupplungsscheiben-Radialrichtung r (Fig. 4) nach innen abnehmender Amplitude ausgebildet. Zudem ist jeder Schwingungs-Beeinflussungsbereich 23 hier beispielhaft mit einem definierten Abstand von der radial inneren Wandung 25 der Trägerplatte 10 beabstandet. Weiter ist jeder Schwingungs-Beeinflussungsbereich 23 hier beispielhaft auch mit einem definierten Abstand von einer radial äußeren Wandung 27 der Trägerplatte 10 beabstandet.

Gemäß Fig. 3 sind hier zudem Endbereiche 29 des jeweiligen sinusförmigen Schwingungs-Beeinflussungsbereichs 23 im Vergleich zu einem sich daran anschließenden Erstreckungsbereich 31 des sinusförmigen Schwingungs-Beeinflussungsbereichs 23, in Draufsicht auf die Trägerplatte 10 gesehen, aufgeweitet bzw. breiter ausgebildet. Konkret weist jeder Endbereich 29 des jeweiligen Schwingungs-Beeinflussungsbereichs 23 hier beispielhaft eine tropfenförmige Außenkontur auf. Dadurch wird die Kerbwirkung der linienförmigen Schwingungs-Beeinflussungsbereiche 23 verringert. Des Weiteren ist hier zudem jeder Endbereich 29 der linienförmigen Schwingungs-Beeinflussungsbereiche 23, in Drehrichtung D der Kupplungsscheibe 8 gesehen, hinter einem sich unmittelbar an den jeweiligen Endbereich 29 anschließenden Bereich 30 des jeweiligen linienförmigen Schwingungs-Beeinflussungsbereichs 23 angeordnet.

In Fig. 4 ist ein Schnitt durch die Kupplungsscheibe 8 entlang der Schnittebene A-A aus Fig. 3 gezeigt. Aus dieser Darstellung geht hervor, dass hier jeder linienförmige Schwingungs-Beeinflussungsbereiche 23 durch eine an der Trägerplatte 10 vorgesehene Ausnehmung 33 gebildet ist, die sich in Trägerplatten-Dickenrichtung bzw. in Kupplungsscheiben-Dickenrichtung d durchgängig bzw. vollständig durch die Trägerplatte 10 erstreckt.

Des Weiteren ist der Reibbelag 9 der Kupplungsscheibe 8 hier beispielhaft durch zwei an der Trägerplatte 10 festgelegte Reibplatten 35, 36 gebildet. Die Reibplatte 35 ist dabei in flächiger Anlage mit einer ersten Hauptflächenwand 37 der Trägerplatte 10. Die Reibplatte 36 ist in flächiger Anlage mit einer der ersten Hauptflächenwand 37 gegenüberliegenden zweiten Hauptflächenwand 39 der Trägerplatte 10. Die Reibplatten 35, 36 können beispielsweise mittels einer Nietverbindung, einer Schraubverbindung oder aber auch mittels einer Klebeverbindung an der Trägerplatte 10 festgelegt sein.

In Fig. 5 ist eine zweite Kupplungsscheibe 8 gezeigt. Im Vergleich zur in Fig. 3 gezeigten ersten Kupplungsscheibe 8 weist die Trägerplatte 10 der Kupplungsscheibe 8 hier keine sinusförmigen Schwingungs-Beeinflussungsbereiche 23, sondern geradlinig in Kupplungsscheiben-Radialrichtung r verlaufende Schwingungs-Beeinflussungsbereiche 41 auf. Jeder geradlinige Schwingungs-Beeinflussungsbereich 41 ist hier beispielhaft ebenfalls mit einem definierten Abstand von der radial inneren Wandung 25 sowie mit einem definierten Abstand von der radial äußeren Wandung 27 der Trägerplatte 10 beabstandet. Zudem sind hier ebenfalls Endbereiche 43 des jeweiligen geradlinigen Schwingungs-Beeinflussungsbereichs 41 im Vergleich zu einem sich daran anschließenden Haupterstreckungsbereich 45 des jeweiligen Schwingungs-Beeinflussungsbereichs 41, in Draufsicht auf die Trägerplatte 10 gesehen, aufgeweitet bzw. breiter ausgebildet. Weiter weisen die Endbereiche 43 der geradlinigen Schwingungs-Beeinflussungsbereiche 41 hier auch eine tropfenförmige Außenkontur auf.

In Fig. 6 ist eine dritte Kupplungsscheibe 8 gezeigt. Im Vergleich zu der in Fig. 3 gezeigten ersten Kupplungsscheibe 8 sind hier keine sinusförmigen Schwingungs-Beeinflussungsbereiche 23, sondern im Wesentlichen hakenförmig ausgebildete Schwingungs-Beeinflussungsbereiche 47 vorgesehen. Ein Endbereich 49 des jeweiligen Schwingungs-Beeinflussungsbereichs 47 mündet hier dabei in die radial äußere Wandung 27 der Trägerplatte 10, so dass die radial äußere Wandung 27 der Trägerplatte 10 hier unterbrochen ist. Ausgehend von der radial äußeren Wandung 27 der Trägerplatte 10 weist jeder hakenförmige Schwingungs-Beeinflussungsbereich 47 hier beispielhaft einen im Wesentlichen S-förmigen Abschnitt 51 auf, an dem sich ein in Wesentlicher C-förmiger Abschnitt 53 des jeweiligen hakenförmigen Schwingungs-Beeinflussungsbereichs 47 anschließt. Ein Endbereich 55 des jeweiligen Schwingungs-Beeinflussungsbereichs 47 ist hier zudem im Vergleich zu einem Haupterstreckungsbereich 57 des jeweiligen hakenförmigen Schwingungs-Beeinflussungsbereichs 47, in Draufsicht auf die Trägerplatte 10 gesehen, aufgeweitet bzw. breiter ausgebildet und weist eine tropfenförmige Außenkontur auf.

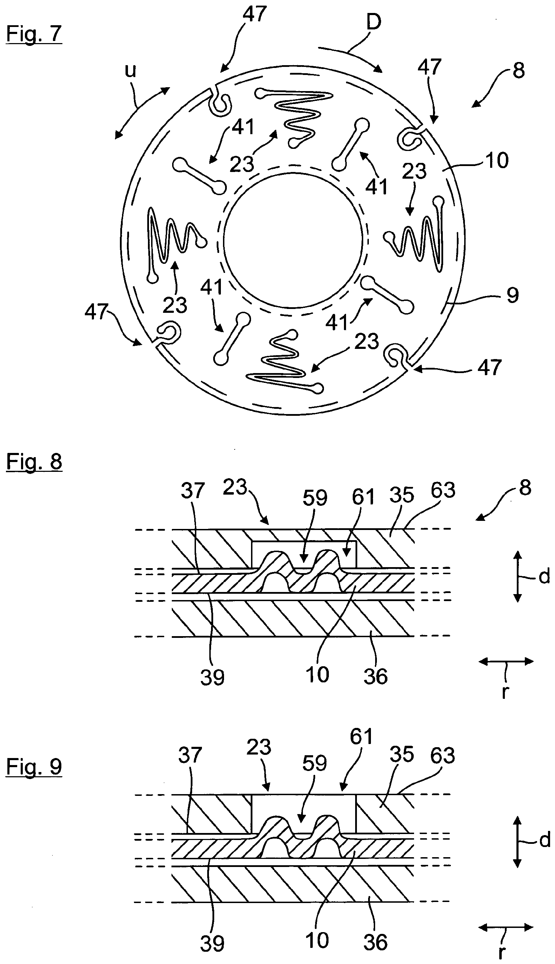

In Fig. 7 ist eine vierte Kupplungsscheibe 8 gezeigt. Im Vergleich zur in Fig. 3 gezeigten ersten Kupplungsscheibe 8 weist die Trägerplatte hier nicht nur die sinusförmigen Schwingungs-Beeinflussungsbereiche 23, sondern auch die geradlinigen Schwingungs-Beeinflussungsbereiche 41 und die hakenförmigen Schwingungs-Beeinflussungsbereiche 47 auf. Somit weist die Trägerplatte 10 hier beispielhaft drei Gruppen mit jeweils vier linienförmigen Schwingungs-Beeinflussungsbereichen 23, 41, 47 auf. Die vier linienförmigen Schwingungs-Beeinflussungsbereiche 23, 41, 47 einer Gruppe weisen dabei einen identischen Linienverlauf auf. Die drei Gruppen unterscheiden sich zudem durch den Linienverlauf ihrer Schwingungs-Beeinflussungsbereiche 23, 41, 47. Des Weiteren sind die Schwingungs-Beeinflussungsbereiche 23, 41, 47 hier ebenfalls voneinander beabstandet sowie, in Kupplungsscheiben-Umfangsrichtung u gesehen, gleichmäßig über die Trägerplatte 10 verteilt angeordnet.

In Fig. 8 ist erfindungsgemäss eine Kupplungsscheibe 8 teilweise gezeigt. Im Vergleich zur in Fig. 4 gezeigten ersten Kupplungsscheibe 8 ist hier jeder Schwingungs-Beeinflussungsbereich 23 nicht durch eine Ausnehmung 33, sondern durch eine Einprägung 59 an der Trägerplatte 10 der Kupplungsscheibe 8 gebildet. Jede Einprägung 59 ist hier beispielhaft, im Querschnitt quer zum Linienverlauf des jeweiligen Schwingungs-Beeinflussungsbereichs 23 gesehen, mäanderförmig bzw. wellenförmig ausgebildet. Zudem ragt jede Einprägung 59 hier beispielhaft in Trägerplatten-Dickenrichtung bzw. in Kupplungsscheiben-Dickenrichtung d von der Hauptflächenwand 37 der Trägerplatte 10 in Richtung der an der Hauptflächenwand 37 anliegenden Reibplatte 35 ab. Im Bereich der jeweiligen Einprägung 59 weist die an der Hauptflächenwand 37 anliegende Reibplatte 35 hier beispielhaft jeweils eine Ausnehmung 61 auf, in die die von der Hauptflächenwand 37 der Trägerplatte 10 abragende Einprägung 59 einragt. Die Ausnehmung 61 erstreckt sich hier beispielhaft bis in eine Tiefe durch die an der Hauptflächenwand 37 anliegende Reibplatte 35, die geringer als die Reibplatten-Dicke ist, so dass eine der Hauptflächenwand 37 abgewandte Hauptflächenwand 63 der Reibplatte 35 hier nicht unterbrochen ist.

Fig. 9 ist auch eine erfindungsgemässe Kupplungsscheibe 8 gezeigt. Im Vergleich zu der in Fig. 8 gezeigten Ausführungsform erstreckt sich die jeweilige Ausnehmung 62 hier in Kupplungsscheiben-Dickenrichtung d durchgängig bzw. vollständig durch die an der Hauptflächenwand 37 anliegende Reibplatte 35, so dass die Hauptflächenwand 63 der Reibplatte 35 hier unterbrochen ist.

### Bezugszeichenliste

- 1: Fahrzeug
- 3: Drehmoment-Übertragungseinrichtung
- 5: Schwungrad
- 7: Eingangswelle
- 8: Kupplungsscheibe
- 9: Reibbelag
- 10: Trägerplatte
- 11: Druckplatte
- 13: Membranfeder
- 15: Ausrücker
- 17: Ausrückhebel
- 19: Torsionsdämpfer
- 21: Kraftfluss
- 23: Schwingungs-Beeinflussungsbereich
- 25: radial innere Wandung
- 27: radial äußere Wandung
- 29: Endbereich
- 30: Bereich
- 31: Haupterstreckungsbereich
- 33: Ausnehmung
- 35: Reibplatte
- 36: Reibplatte
- 37: Hauptflächenwand
- 39: Hauptflächenwand
- 41: Schwingungs-Beeinflussungsbereich
- 43: Endbereich
- 45: Haupterstreckungsbereich
- 47: Schwingungs-Beeinflussungsbereich
- 49: Endbereich
- 51: Abschnitt
- 53: Abschnitt
- 55: Endbereich
- 57: Haupterstreckungsbereich
- 59: Einprägung
- 61: Ausnehmung
- 62: Ausnehmung
- 63: Hauptflächenwand
- d: Kupplungsscheiben-Dickenrichtung
- D: Kupplungsscheiben-Drehrichtung
- r: Kupplungsscheiben-Radialrichtung
- u: Kupplungsscheiben-Umfangsrichtung

## Patentansprüche

1. Kupplungsscheibe für eine lösbare Drehmoment-Übertragungseinrichtung, mit einer Trägerplatte (10), an der ein Reibbelag (9) zum kraftschlüssigen Schließen der Drehmoment-Übertragungseinrichtung (3) vorgesehen ist, wobei zur Beeinflussung des Schwingverhaltens der Kupplungsscheibe (8) wenigstens ein Schwingungs-Beeinflussungsbereich (23, 41, 47) an der Trägerplatte (10) ausgebildet ist, wobei der Schwingungs-Beeinflussungsbereich (23, 41, 47) durch eine Einprägung (59) an der Trägerplatte (10) gebildet ist, wobei der Schwingungs-Beeinflussungsbereich (23, 41, 47), in Draufsicht auf die Trägerplatte (10) gesehen, linienförmig verläuft, **dadurch gekennzeichnet, dass** die Einprägung (59), im Querschnitt quer zum Linienverlauf des linienförmigen Schwingungs-Beeinflussungsbereich (23, 41, 47) gesehen, mäanderförmig und/oder wellenförmig ausgebildet ist.

2. Kupplungsscheibe nach Anspruch 1, **dadurch gekennzeichnet, dass** ein erster Endbereich (29, 43, 55) des linienförmigen Schwingungs-Beeinflussungsbereichs (23, 41, 47) radial innerhalb eines zweiten Endbereichs (29, 43, 49) des linienförmigen Schwingungs-Beeinflussungsbereichs (23, 41, 47) angeordnet ist.

3. Kupplungsscheibe nach Anspruch 1 oder 2, **dadurch gekennzeichnet, dass** der wenigstens eine linienförmige Schwingungs-Beeinflussungsbereich (41) geradlinig verläuft, wobei bevorzugt vorgesehen ist, dass der wenigstens eine geradlinige Schwingungs-Beeinflussungsbereich (41) in Kupplungsscheiben-Radialrichtung (r) verläuft und/oder mit einem definierten Abstand von einer radial inneren Wandung (25) der Trägerplatte (10) beabstandet ist und/oder mit einem definierten Abstand von einer radial äußeren Wandung (27) der Trägerplatte (10) beabstandet ist.

4. Kupplungsscheibe nach einem der vorhergehenden Ansprüche, **dadurch gekennzeichnet, dass** der wenigstens eine linienförmige Schwingungs-Beeinflussungsbereich (23) mäanderförmig ausgebildet ist, wobei bevorzugt vorgesehen ist, dass der wenigstens eine mäanderförmige Schwingungs-Beeinflussungsbereich (23) im Wesentlichen sinusförmig mit in Kupplungsscheiben-Radialrichtung (r) nach innen abnehmender Amplitude ausgebildet ist.

5. Kupplungsscheibe nach Anspruch 4, **dadurch gekennzeichnet, dass** der wenigstens eine mäanderförmige Schwingungs-Beeinflussungsbereich (23) mit einem definierten Abstand von einer radial inneren Wandung (25) und/oder mit einem definierten Abstand von einer radial äußeren Wandung (27) der Trägerplatte (10) beabstandet ist.

6. Kupplungsscheibe nach einem der vorhergehenden Ansprüche, **dadurch gekennzeichnet, dass** der wenigstens eine linienförmige Schwingungs-Beeinflussungsbereich (47) im Wesentlichen hakenförmig ausgebildet ist, wobei bevorzugt vorgesehen ist, dass der wenigstens eine hakenförmige Schwingungs-Beeinflussungsbereich (47) mit einem Endbereich (49) in eine radial äußere Wandung (27) der Trägerplatte (10) mündet.

7. Kupplungsscheibe nach Anspruch 6, **dadurch gekennzeichnet, dass** der hakenförmige Schwingungs-Beeinflussungsbereich (47) ausgehend von der radial äußeren Wandung (27) der Trägerplatte (10) einen im Wesentlichen S-förmigen Abschnitt (51) aufweist, an den sich ein im Wesentlichen C-förmiger Abschnitt (53) des hakenförmigen Schwingungs-Beeinflussungsbereichs (47) anschließt.

8. Kupplungsscheibe nach einem der vorhergehenden Ansprüche, **dadurch gekennzeichnet, dass** zur Verringerung der Kerbwirkung wenigstens ein Endbereich (29, 43, 55) des linienförmigen Schwingungs-Beeinflussungsbereichs (23, 41, 47) im Vergleich zu einem sich daran anschließenden Haupterstreckungsbereich (31, 45, 57) des linienförmigen Schwingungs-Beeinflussungsbereichs (23, 41, 47), in Draufsicht auf die Trägerplatte (10) gesehen, aufgeweitet und/oder breiter ausgebildet ist.

9. Kupplungsscheibe nach einem der vorhergehenden Ansprüche, **dadurch gekennzeichnet, dass** zur Verringerung der Kerbwirkung wenigstens ein Endbereich (29, 43, 55) des linienförmigen Schwingungs-Beeinflussungsbereichs (23, 41, 47) eine runde, insbesondere eine tropfenförmige und/oder eine kreisförmige, Außenkontur aufweist.

10. Kupplungsscheibe nach einem der vorhergehenden Ansprüche, **dadurch gekennzeichnet, dass** der Kupplungs-Reibbelag (9) durch zumindest eine an der Trägerplatte festgelegte Reibplatte (35, 36) gebildet ist, wobei die Reibplatte (35, 36) einer Hauptflächenwand (37, 39) der Trägerplatte (10) zugeordnet ist, wobei die wenigstens eine Einprägung (59) der Trägerplatte (10) in Trägerplatten-Dickenrichtung (d) von wenigstens einer Hauptflächenwand (37) der Trägerplatte (10) abragt, und wobei die Reibplatte (35) wenigstens eine Ausnehmung (61, 62) aufweist, in die die von der Hauptflächenwand (37) der Trägerplatte (10) abragende Einprägung (59) einragt.

11. Kupplungsscheibe nach Anspruch 10, **dadurch gekennzeichnet, dass** sich die wenigstens eine Ausnehmung (62) in Reibplatten-Dickenrichtung (d) durchgängig durch die Reibplatte (35) erstreckt, oder dass sich die wenigstens eine Ausnehmung (61) bis in eine Tiefe durch die Reibplatte (35) erstreckt, die geringer als die Reibplatten-Dicke ist.

12. Lösbare Drehmoment-Übertragungseinrichtung mit einer Kupplungsscheibe nach einem der vorhergehenden Ansprüche.

13. Fahrzeug, insbesondere Nutzfahrzeug, mit einer lösbaren Drehmoment-Übertragungseinrichtung nach Anspruch 12.

## Claims

1. Clutch disc for a disengaging torque transmission device, having a carrier plate (10) on which a friction lining (9) is provided for non-positive closure of the torque transmission device (3), wherein at least one vibration-influencing area (23, 41, 47) is formed on the carrier plate (10) for influencing the vibration behaviour of the clutch disc (8), the vibration-influencing area (23, 41, 47) being formed by an impression (59) on the carrier plate (10), wherein in a top view of the carrier plate (10) the vibration-influencing area (23, 41, 47) runs linearly, **characterized in that** viewed in cross section transversely to the linear course of the linear vibration-influencing area (23, 41, 47), the impression (59) is of meandering and/or undulating form.

2. Clutch disc according to Claim 1, **characterized in that** a first end area (29, 43, 55) of the linear vibration-influencing area (23, 41, 47) is arranged radially inside a second end area (29, 43, 49) of the linear vibration-influencing area (23, 41, 47).

3. Clutch disc according to Claim 1 or 2, **characterized in that** at least the one linear vibration-influencing area (41) runs rectilinearly, at least the one rectilinear vibration-influencing area (41) preferably running in the clutch disc radial direction (r) and/or being separated by a defined interval from a radially inner wall (25) of the carrier plate (10) and/or being separated by a defined interval from a radially outer wall (27) of the carrier plate (10).

4. Clutch disc according to one of the preceding claims, **characterized in that** at least the one linear vibration-influencing area (23) is of a meandering form, at least the one meandering vibration-influencing area (23) preferably being of a substantially sinusoidal form with an amplitude diminishing inwards in the clutch disc radial direction (r).

5. Clutch disc according to Claim 4, **characterized in that** at least the one meandering vibration-influencing area (23) is separated by a defined interval from a radially inner wall (25) and/or separated by a defined interval from a radially outer wall (27) of the carrier plate (10).

6. Clutch disc according to one of the preceding claims, **characterized in that** at least the one linear vibration-influencing area (47) is of a substantially hook-shaped form, at least the one hook-shaped vibration-influencing area (47) preferably opening with an end area (49) into a radially outer wall (27) of the carrier plate (10).

7. Clutch disc according to Claim 6, **characterized in that** the hook-shaped vibration-influencing area (47) proceeding from the radially outer wall (27) of the carrier plate (10) comprises a substantially S-shaped portion (51), adjoining which is a substantially C-shaped portion (53) of the hook-shaped vibration-influencing area (47)

8. Clutch disc according to one of the preceding claims, **characterized in that** in order to reduce the notch effect, at least an end area (29, 43, 55) of the linear vibration-influencing area (23, 41, 47), in a top view of the carrier plate (10), is expanded and/or of wider formation compared to an adjoining area of main extent (31, 45, 57) of the linear vibration-influencing area (23, 41, 47).

9. Clutch disc according to one of the preceding claims, **characterized in that** in order to reduce the notch effect at least an end area (29, 43, 55) of the linear vibration-influencing area (23, 41, 47) has a round, in particular drop-shaped and/or a circular external contour.

10. Clutch disc according to one of the preceding claims, **characterized in that** the clutch friction lining (9) is formed by at least one friction plate (35, 36) fixed to the carrier plate, the friction plate (35, 36) being assigned to a main face wall (37, 39) of the carrier plate (10), at least the one impression (59) of the carrier plate (10) protruding from at least one main face wall (37) of the carrier plate (10) in the carrier plate thickness direction (d), and the friction plate (35) having at least one opening (61, 62), into which the impression (59) protruding from the main face wall (37) of the carrier plate (10) extends.

11. Clutch disc according to Claim 10, **characterized in that** at least the one opening (62) extends continuously through the friction plate (35) in the friction plate thickness direction (d), or that at least the one opening (61) extends through the friction plate (35) to a depth which is less than the thickness of the friction plate.

12. Disengaging torque transmission device having a clutch disc according to one of the preceding claims.

13. Vehicle, in particular a commercial vehicle, having a disengaging torque transmission device according to Claim 12.

## Revendications

1. Disque d'embrayage pour un dispositif de transfert de couple amovible, comprenant une plaque de support (10) sur laquelle est prévue une garniture de friction (9) pour la fermeture par engagement par force du dispositif de transfert de couple (3), au moins une région d'influence des oscillations (23, 41, 47) étant réalisée sur la plaque de support (10) pour influencer le comportement d'oscillation du disque d'embrayage (8), la région d'influence des oscillations (23, 41, 47) étant formée par un gaufrage (59) sur la plaque de support (10), la région d'influence des oscillations (23, 41, 47), en vue de dessus sur la plaque de support (10), s'étendant sous forme linéaire, **caractérisé en ce que** le gaufrage (59), en section transversale transversalement à l'allure linéaire de la région linéaire d'influence des oscillations (23, 41, 47), est réalisé en forme de méandres et/ou sous forme ondulée.

2. Dispositif d'embrayage selon la revendication 1, **caractérisé en ce qu'**une première région d'extrémité (29, 43, 55) de la région linéaire d'influence des oscillations (23, 41, 47) est disposée radialement à l'intérieur d'une deuxième région d'extrémité (29, 43, 49) de la région linéaire d'influence des oscillations (23, 41, 47).

3. Disque d'embrayage selon la revendication 1 ou 2, **caractérisé en ce que** l'au moins une région linéaire d'influence des oscillations (41) s'étend sous forme linéaire, et il est prévu de préférence que l'au moins une région linéaire d'influence des oscillations (41) s'étende dans la direction radiale du disque d'embrayage (r) et/ou soit espacée d'une distance définie d'une paroi radialement intérieure (25) de la plaque de support (10) et/ou soit espacée d'une distance définie d'une paroi radialement extérieure (27) de la plaque de support (10).

4. Disque d'embrayage selon l'une quelconque des revendications précédentes, **caractérisé en ce que** l'au moins une région linéaire d'influence des oscillations (23) est réalisée en forme de méandres, et de préférence il est prévu que l'au moins une région linéaire d'influence des oscillations (23) soit réalisée essentiellement sous forme sinusoïdale avec une amplitude diminuant vers l'intérieur dans la direction radiale du disque d'embrayage (r).

5. Disque d'embrayage selon la revendication 4, **caractérisé en ce que** l'au moins une région d'influence des oscillations (23) en forme de méandres est espacée d'une distance définie d'une paroi radialement intérieure (25) et/ou d'une distance définie d'une paroi radialement extérieure (27) de la plaque de support (10).

6. Disque d'embrayage selon l'une quelconque des revendications précédentes, **caractérisé en ce que** l'au moins une région linéaire d'influence des oscillations (47) est réalisée essentiellement en forme de crochet, et de préférence il est prévu que l'au moins une région d'influence des oscillations (47) en forme de crochet débouche avec une région d'extrémité (49) dans une paroi radialement extérieure (27) de la plaque de support (10).

7. Disque d'embrayage selon la revendication 6, **caractérisé en ce que** la région d'influence des oscillations en forme de crochet (47) présente, à partir de la paroi radialement extérieure (27) de la plaque de support (10), une portion essentiellement en forme de S (51) à laquelle se raccorde une portion essentiellement forme de C (53) de la région d'influence des oscillations (47) en forme de crochet.

8. Disque d'embrayage selon l'une quelconque des revendications précédentes, **caractérisé en ce que** pour réduire l'effet d'encoche, au moins une région d'extrémité (29, 43, 55) de la région linéaire d'influence des oscillations, par comparaison avec une région d'étendue principale (31, 45, 57) de la région linéaire d'influence des oscillations (23, 41, 47) s'y raccordant, en vue de dessus sur la plaque de support (10), est élargie et/ou réalisée sous forme plus large.

9. Disque d'embrayage selon l'une quelconque des revendications précédentes, **caractérisé en ce que** pour réduire l'effet d'encoche, au moins une région d'extrémité (29, 43, 55) de la région linéaire d'influence des oscillations (23, 41, 47), présente un contour extérieur rond, en particulier en forme de goutte et/ou de forme circulaire.

10. Disque d'embrayage selon l'une quelconque des revendications précédentes, **caractérisé en ce que** la garniture de friction d'embrayage (9) est formée par au moins une plaque de friction (35, 36) fixée à la plaque de support, la plaque de friction (35, 36) étant associée à une paroi de surface principale (37, 39) de la plaque de support (10), l'au moins un gaufrage (59) de la plaque de support (10) faisant saillie dans la direction de l'épaisseur de la plaque de support (d) depuis au moins une paroi de surface principale (37) de la plaque de support (10), et la plaque de friction (35) présentant au moins un évidement (61, 62) dans lequel pénètre le gaufrage (59) faisant saillie depuis la paroi de surface principale (37) de la plaque de support (10).

11. Disque d'embrayage selon la revendication 10, **caractérisé en ce que** l'au moins un évidement (62) s'étend en continu à travers la plaque de friction (35) dans la direction de l'épaisseur de la plaque de friction (d), ou **en ce que** l'au moins un évidement (61) s'étend jusqu'à une profondeur à travers la plaque de friction (35) qui est inférieure à l'épaisseur de la plaque de friction.

12. Dispositif de transfert de couple amovible comprenant un disque d'embrayage selon l'une quelconque des revendications précédentes.

13. Véhicule, en particulier véhicule utilitaire comprenant un dispositif de transfert de couple amovible selon la revendication 12.
